# EUROPÄISCHE PATENTSCHRIFT

(11) **EP 3 900 271 B1**
(45) Veröffentlichungstag und Bekanntmachung des Hinweises auf die Patenterteilung: **28.06.2023**
(21) Anmeldenummer: 19821067.6
(22) Anmeldetag: 11.12.2019
(51) Int. Cl.: H04L 12/40, H04L 25/02

(54) **EINRICHTUNG FÜR EINE TEILNEHMERSTATION EINES SERIELLEN BUSSYSTEMS UND VERFAHREN ZUR KOMMUNIKATION IN EINEM SERIELLEN BUSSYSTEM**
DEVICE FOR A SUBSCRIBER STATION OF A SERIAL BUS SYSTEM AND METHOD FOR COMMUNICATION IN A SERIAL BUS SYSTEM
DISPOSITIF POUR UNE STATION PARTICIPANTE D'UN SYSTÈME DE BUS SÉRIE ET PROCÉDÉ DE COMMUNICATION DANS UN SYSTÈME DE BUS SÉRIE

(30) Priorität: 17.12.2018 DE 102018221957
(43) Veröffentlichungstag der Anmeldung: 27.10.2021
(73) Patentinhaber: Robert Bosch GmbH, 70442 Stuttgart (DE)
(72) Erfinder: HARTWICH, Florian, 72762 Reutlingen (DE); WALKER, Steffen, 72770 Reutlingen (DE); MUTTER, Arthur, 73765 Neuhausen (DE)
(86) Internationale Anmeldenummer: PCT/EP2019/084704
(87) Internationale Veröffentlichungsnummer: WO 2020/126756

(56) Entgegenhaltungen:
- DE-A1-102015 222 334
- DE-A1-102017 205 785

## Beschreibung

### Technisches Gebiet

Die vorliegende Erfindung betrifft eine Einrichtung für eine Teilnehmerstation eines seriellen Bussystems und ein Verfahren zur Kommunikation in einem seriellen Bussystem, das mit hoher Datenrate und großer Fehlerrobustheit arbeitet.

### Stand der Technik

Für die Kommunikation zwischen Sensoren und Steuergeräten, beispielsweise in Fahrzeugen, wird häufig ein Bussystem eingesetzt, in welchem Daten als Nachrichten im Standard ISO11898-1:2015 als CAN Protokoll-Spezifikation mit CAN FD übertragen werden. Die Nachrichten werden zwischen den Busteilnehmern des Bussystems, wie Sensor, Steuergerät, Geber, usw., übertragen.

Mit steigender Anzahl an Funktionen einer technischen Anlage bzw. eines Fahrzeugs nimmt auch der Datenverkehr im Bussystem zu. Noch dazu ist es oft gefordert, dass die Daten schneller vom Sender zum Empfänger zu übertragen sind als bisher. Folge davon ist, dass die geforderte Bandbreite des Bussystems weiter steigen wird.

Um Daten mit höherer Bitrate übertragen zu können als bei CAN, wurde im CAN FD Nachrichten-Format eine Option zur Umschaltung auf eine höhere Bitrate innerhalb einer Nachricht geschaffen. Bei solchen Techniken wird die maximal mögliche Datenrate durch Einsatz einer höheren Taktung im Bereich der Datenfelder über einen Wert von 1 MBit/s hinaus gesteigert. Solche Nachrichten werden nachfolgend auch als CAN FD-Rahmen oder CAN FD-Nachrichten bezeichnet. Bei CAN FD ist die Nutzdatenlänge von 8 auf bis zu 64 Bytes erweitert und sind die Datenübertragungsraten deutlich höher als bei CAN.

Auch wenn ein CAN oder CAN FD basiertes Kommunikationsnetzwerk im Hinblick auf beispielsweise seine Robustheit sehr viele Vorteile bietet, hat es doch eine deutlich geringere Schnelligkeit im Vergleich zu einer Datenübertragung bei zum Beispiel 100 Base-T1 Ethernet. Außerdem ist die bisher mit CAN FD erreichte Nutzdatenlänge von bis zu 64 Bytes für einige Anwendungen zu gering. Eine aus dem Stand der Technik bekannte Einrichtung für eine Teilnehmerstation eines seriellen Bussystems ist in der Patentanmeldung DE 10 2015 222334 A1 beschrieben.

### Offenbarung der Erfindung

Daher ist es Aufgabe der vorliegenden Erfindung, eine Einrichtung für eine Teilnehmerstation eines seriellen Bussystems und ein Verfahren zur Kommunikation in einem seriellen Bussystem bereitzustellen, welche die zuvor genannten Probleme lösen. Insbesondere sollen eine Einrichtung für eine Teilnehmerstation eines seriellen Bussystems und ein Verfahren zur Kommunikation in einem seriellen Bussystem bereitgestellt werden, bei welchen bei großer Flexibilität im Betrieb einer technischen Anlage, in welcher das Bussystem zur Kommunikation eingesetzt wird, und mit großer Fehlerrobustheit der Kommunikation eine hohe Datenrate und eine Steigerung der Menge der Nutzdaten pro Rahmen realisiert werden kann.

Die Aufgabe wird durch eine Einrichtung für eine Teilnehmerstation eines seriellen Bussystems mit den Merkmalen von Anspruch 1 gelöst. Die Einrichtung hat einen Empfänger zum Empfang eines Signals von einem Bus des Bussystems, bei welchem für eine Nachricht, die zwischen Teilnehmerstationen des Bussystems ausgetauscht wird, ein rezessiver Buszustand von einem dominanten Buszustand überschreibbar ist und der rezessive Buszustand in der ersten Kommunikationsphase anders erzeugt wird als der rezessive Buszustand in der zweiten Kommunikationsphase, wobei der Empfänger ausgestaltet ist, auf der Grundlage des von dem Bus empfangenen Signals ein digitales Signal zu erzeugen und das Signal an eine Kommunikationssteuereinrichtung zum Auswerten der in dem digitalen Signal enthaltenen Daten auszugeben, wobei der Empfänger zudem ausgestaltet ist, in der zweiten Kommunikationsphase zur Erzeugung des digitalen Signals mindestens eine erste Empfangsschwelle und eine zweite Empfangsschwelle zu verwenden, und wobei die zweite Empfangsschwelle einen Spannungswert hat, der kleiner als der Spannungswert der ersten Empfangsschwelle oder größer als der größte Spannungswert ist, der sich im Normalbetrieb für einen dominanten Buszustand in der zweiten Kommunikationsphase auf dem Bus einstellt.

Aufgrund der Ausgestaltung der Einrichtung ist auch in dem Fall, dass in der Datenphase beide Buszustände in einem Rahmen aktiv getrieben werden, das Erkennen eines Sendekonflikts möglich. Dies gilt auch, wenn es auf dem Bus zu einer Überlagerung von getriebenen Signalen kommt, wodurch sich "analoge" Pegel auf dem Bus einstellen. Daher kann eine Auswertung durch einen Mikrocontroller in der Einrichtung und/oder durch die Kommunikationssteuereinrichtung entfallen, der/die in einem solchen Fall einen Sendekonflikt durch den Vergleich von Sendesignal TXD und Empfangssignal RXD nicht mehr sicher erkennen kann, da das resultierende Empfangssignal RXD nicht mehr genau vorhersagbar ist.

Daher ist jede Teilnehmerstation des Bussystems aufgrund der Ausgestaltung der Einrichtung in der Lage, die Sendung einer beliebigen anderen Teilnehmerstation mit einem Fehlerrahmen zu stören bzw. zu unterbrechen. Aus Sicht des Anwenders ist dies sehr vorteilhaft, da dadurch im Fehlerfall Zeit gespart werden kann, indem eine derzeit gesendete Nachricht abgebrochen wird und danach andere Information auf dem Bus übertragen werden kann. Das ist insbesondere bei Rahmen von großem Nutzen, die länger sind als ein CAN FD Rahmen mit 64 Byte in der Datenphase, insbesondere bei Rahmen die 2-4kbyte oder mehr enthalten sollen.

Als Folge davon kann mit der Einrichtung, die insbesondere ein Empfänger oder eine Sende-/Empfangseinrichtung ist, auch bei Steigerung der Menge der Nutzdaten pro Rahmen ein Empfang der Rahmen mit großer Flexibilität im Hinblick auf aktuelle Ereignisse im Betrieb des Bussystems und mit geringer Fehlerquote gewährleistet werden. Somit kann in dem seriellen Bussystem auch mit großer Fehlerrobustheit kommuniziert werden, wenn eine hohe Datenrate und eine Steigerung der Menge der Nutzdaten pro Rahmen erfolgt.

Daher ist es mit der Einrichtung in dem Bussystem insbesondere möglich, in einer ersten Kommunikationsphase eine von CAN bekannte Arbitration beizubehalten und dennoch die Übertragungsrate gegenüber CAN oder CAN FD nochmals beträchtlich zu steigern.

Dies trägt mit dazu bei, eine Nettodatenrate von mindestens 5 Mbit/s bis etwa 8 Mbit/s oder 10 Mbit/s zu realisieren. In diesem Fall ist ein Bit weniger als 100 ns lang. Noch dazu kann die Größe der Nutzdaten bis zu 4096 Byte pro Rahmen betragen.

Das von der Einrichtung durchgeführte Verfahren kann auch zum Einsatz kommen, wenn in dem Bussystem auch mindestens eine CAN FD tolerante CAN-Teilnehmerstation, die gemäß dem Standard der ISO 11898-1:2015 ausgestaltet ist, und/oder mindestens eine CAN FD Teilnehmerstation vorhanden ist, die Nachrichten nach dem CAN-Protokoll und/oder CAN FD Protokoll senden.

Der Empfänger ist ausgestaltet, in der zweiten Kommunikationsphase zur Erzeugung des digitalen Signals zusätzlich eine dritte Empfangsschwelle zu verwenden, die einen Spannungswert hat, der größer als der größte Spannungswert ist, der von einer Teilnehmerstation des Bussystems für einen Buszustand in der zweiten Kommunikationsphase getrieben wird, wobei für den Empfänger mit der zweiten Empfangsschwelle eine andere Art des Sendekonflikts erkennbar ist als mit der dritten Empfangsschwelle.

Vorteilhafte weitere Ausgestaltungen der Einrichtung sind in den abhängigen Ansprüchen angegeben.

Gemäß einer speziellen Ausführungsvariante ist der Empfänger ausgestaltet, mindestens die zweite Empfangsschwelle in einem definierten Zeitfenster daraufhin zu prüfen, ob das vom Bus empfangene Signal die zweite Empfangsschwelle nicht mehr unterschreitet oder überschreitet.

Gemäß einer speziellen Ausführungsvariante sind die Buszustände des in der ersten Kommunikationsphase von dem Bus empfangenen Signals mit einem anderen Physical Layer erzeugt als die Buszustände des in der zweiten Kommunikationsphase empfangenen Signals.

Gemäß einer weiteren speziellen Ausführungsvariante haben die Buszustände des in der ersten Kommunikationsphase von dem Bus empfangenen Signals eine längere Bitzeit als die Buszustände des in der zweiten Kommunikationsphase empfangenen Signals.

Möglicherweise wird in der ersten Kommunikationsphase ausgehandelt, welche der Teilnehmerstationen des Bussystems in der nachfolgenden zweiten Kommunikationsphase einen zumindest zeitweise exklusiven, kollisionsfreien Zugriff auf den Bus bekommt.

Möglicherweise hat die Einrichtung zudem eine Empfangsschwellen-Anpasseinrichtung zur Auswertung des von dem Bus empfangenen Signals in Bezug auf die derzeit vorliegende Kommunikationsphase und zur Schaltung des Spannungswerts und der Anzahl der verwendeten Empfangsschwelle(n) auf der Grundlage des Ergebnisses der Auswertung.

Denkbar ist, dass die Empfangsschwellen-Anpasseinrichtung zu der ersten Empfangsschwelle mindestens eine zweite Empfangsschwelle hinzuschaltet, wenn nach der ersten Kommunikationsphase, in welcher kein exklusiver, kollisionsfreier Zugriff einer Teilnehmerstation auf den Bus des Bussystems gewährleistet ist, zu der Kommunikationsphase mit dem exklusiven, kollisionsfreien Zugriff auf den Bus umgeschaltet wird.

Die Einrichtung kann zudem einen Sender zum Senden von Nachrichten auf einen Bus des Bussystems haben, wobei der Sender beim Senden der verschiedenen Kommunikationsphasen einer Nachricht ausgestaltet ist, zwischen einer ersten Betriebsart und einer zweiten Betriebsart zu schalten. Hierbei ist möglicherweise der Sender in der ersten Betriebsart ausgestaltet, einen ersten Datenzustand als Buszustand mit unterschiedlichen Buspegeln für zwei Busadern der Busleitung zu erzeugen und einen zweiten Datenzustand als Buszustand mit demselben Buspegel für die zwei Busadern der Busleitung zu erzeugen, und wobei der Sender in der zweiten Betriebsart ausgestaltet ist, einen Buszustand für den ersten Datenzustand zu erzeugen wie in der ersten Betriebsart und den Buszustand für den zweiten Datenzustand anders zu erzeugen als den Buszustand für den zweiten Datenzustand in der ersten Betriebsart.

Die zuvor beschriebene Einrichtung kann Teil einer Teilnehmerstation für ein serielles Bussystem sein, die zudem eine Kommunikationssteuereinrichtung zum Steuern einer Kommunikation der Teilnehmerstation mit mindestens einer anderen Teilnehmerstation des Bussystems aufweist.

Hierbei besteht die Option, dass die Einrichtung ausgestaltet ist, der Kommunikationssteuereinrichtung mit dem Empfangssignal oder mit einem Signal über eine separate Leitung zu signalisieren, wenn eine Auswertung der Empfangsschwellen und optional einer zeitlichen Korrelation zwischen den Sendesignal und dem Empfangssignal ergibt, dass ein Sendekonflikt auf dem Bus vorliegt, und wobei die Kommunikationssteuereinrichtung ausgestaltet ist, das Sendesignal auf der Grundlage des Signals zu erzeugen oder abzubrechen und/oder anderen Teilnehmerstationen des Bussystems den Sendekonflikt zu signalisieren.

Die zuvor beschriebene Teilnehmerstation kann Teil eines Bussystems sein, das zudem einen Bus und mindestens zwei Teilnehmerstationen umfasst, welche über den Bus derart miteinander verbunden sind, dass sie seriell miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur Kommunikation in einem seriellen Bussystem nach Anspruch 13 gelöst. Das Verfahren wird mit einem Empfänger zum Empfang eines Signals von einem Bus des Bussystems ausgeführt, wobei der Empfänger die Schritte ausführt, Empfangen eines Signals von dem Bus des Bussystems, bei welchem für eine Nachricht, die zwischen Teilnehmerstationen des Bussystems ausgetauscht wird, ein rezessiver Buszustand von einem dominanten Buszustand überschreibbar ist und der rezessive Buszustand in der ersten Kommunikationsphase anders erzeugt wird als der rezessive Buszustand in der zweiten Kommunikationsphase, Erzeugen eines digitalen Signals, auf der Grundlage des von dem Bus empfangenen Signals, und Ausgeben des erzeugten digitalen Signals an eine Kommunikationssteuereinrichtung zum Auswerten der in dem digitalen Signal enthaltenen Daten, wobei der Empfänger in der zweiten Kommunikationsphase zur Erzeugung des digitalen Signals mindestens eine erste Empfangsschwelle und eine zweite Empfangsschwelle verwendet, und wobei die zweite Empfangsschwelle einen Spannungswert hat, der kleiner als der Spannungswert der ersten Empfangsschwelle oder größer als der größte Spannungswert ist, der sich im Normalbetrieb für einen dominanten Buszustand in der zweiten Kommunikationsphase auf dem Bus einstellt.

Das Verfahren bietet dieselben Vorteile, wie sie zuvor in Bezug auf die Einrichtung und/oder die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus von Nachrichten, die von einer Sende-/Empfangseinrichtung für eine Teilnehmerstation des Bussystems gemäß dem ersten Ausführungsbeispiel gesendet werden können;
Fig. 3 ein vereinfachtes schematisches Blockschaltbild einer Teilnehmerstation des Bussystems gemäß dem ersten Ausführungsbeispiel;
Fig. 4 einen zeitlichen Verlauf von Bussignalen CAN-EL_H und CAN-EL_L, die sich im Normalbetrieb auf einem Bus des Bussystems gemäß dem ersten Ausführungsbeispiel einstellen;
Fig. 5 einen zeitlichen Verlauf einer Differenzspannung VDIFF, die aus den Bussignalen CAN-EL_H und CAN-EL_L von Fig. 4 resultiert;
Fig. 6 und Fig. 7 einen zeitlichen Verlauf eines Sendesignals TxD1 in einer Datenphase einer Nachricht, die von einer ersten Teilnehmerstation des Bussystems gemäß dem ersten Ausführungsbeispiel gesendet wird und eines Sendesignals TxD2, das von einer anderen Teilnehmerstation zum Abbruch des Sendesignals TxD1 gesendet wird;
Fig. 8 einen zeitlichen Verlauf von Bussignalen CAN-EL_H und CAN-EL_L, die sich aufgrund der Sendesignale TxD1, TxD2 von Fig. 6 und Fig. 7 auf dem Bus einstellen;
Fig. 9 einen zeitlichen Verlauf einer Differenzspannung VDIFF, die aus den Bussignalen CAN-EL_H und CAN-EL_L von Fig. 8 resultiert und die mit Empfangsschwellen eines Empfängers gemäß dem ersten Ausführungsbeispiel ausgewertet wird; und
Fig. 10 und Fig. 11 jeweils den zeitlichen Verlauf der Differenzspannung VDIFF von Fig. 9, die mit Empfangsschwellen eines Empfängers gemäß einem zweiten und dritten Ausführungsbeispiel ausgewertet wird.

In den Figuren sind gleiche oder funktionsgleiche Elemente, sofern nichts Anderes angegeben ist, mit denselben Bezugszeichen versehen.

### Beschreibung der Ausführungsbeispiele

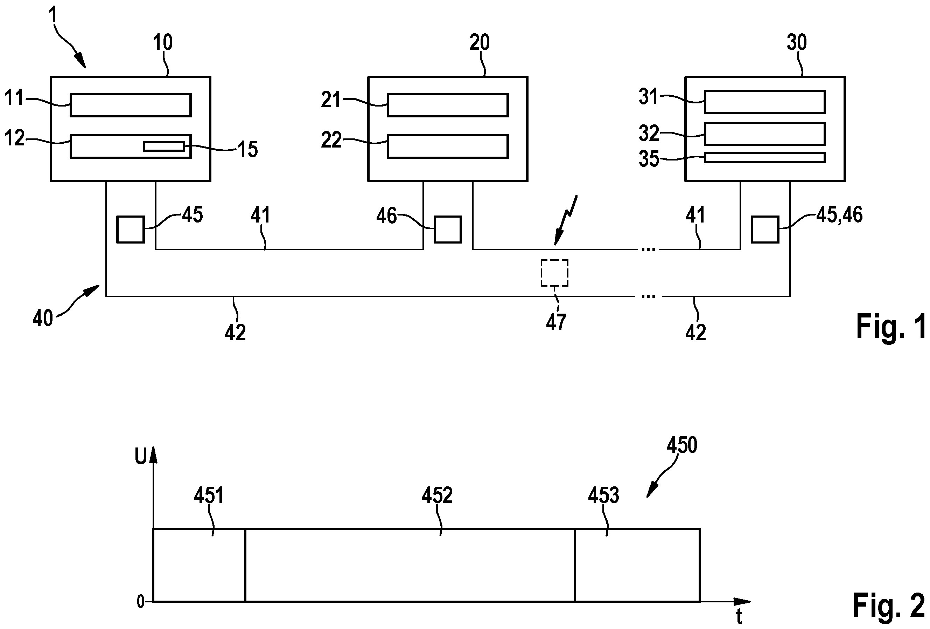

Fig. 1 zeigt als Beispiel ein Bussystem 1, das insbesondere grundlegend für ein CAN-Bussystem, ein CAN FD-Bussystem, ein CAN EL-Bussystem, und/oder Abwandlungen davon, ausgestaltet ist, wie nachfolgend beschrieben. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L oder CAN-EL_H und CAN-EL_L genannt werden und dienen zur elektrischen Signalübertragung nach Einkopplung der Differenzpegel oder dominanten Pegel bzw. Erzeugung von rezessiven Pegeln für ein Signal im Sendezustand. Über den Bus 40 sind Nachrichten 45, 46 in der Form von Signalen zwischen den einzelnen Teilnehmerstationen 10, 20, 30 seriell übertragbar. Tritt bei der Kommunikation auf dem Bus 40 ein Fehler auf, wie durch den gezackten schwarzen Blockpfeil in Fig. 1 dargestellt, kann ein Fehlerrahmen 47 (Error Flag) gesendet werden. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11, eine Sende-/Empfangseinrichtung 12 und eine Empfangsschwellen-Anpasseinrichtung 15. Die Teilnehmerstation 20 hat dagegen eine Kommunikationssteuereinrichtung 21 und eine Sende-/Empfangseinrichtung 22. Die Teilnehmerstation 30 hat eine Kommunikationssteuereinrichtung 31, eine Sende-/Empfangseinrichtung 32 und eine Empfangsschwellen-Anpasseinrichtung 35. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

Die Kommunikationssteuereinrichtung 11 erstellt und liest erste Nachrichten 45, die beispielsweise modifizierte CAN Nachrichten 45 sind. Hierbei sind die modifizierten CAN Nachrichten 45 auf der Grundlage eines CAN EL-Formats aufgebaut, das in Bezug auf Fig. 2 detaillierter beschrieben ist.

Die Kommunikationssteuereinrichtung 21 kann wie ein herkömmlicher CAN-Controller nach ISO 11898-1:2015 ausgeführt sein. Die Kommunikationssteuereinrichtung 21 erstellt und liest zweite Nachrichten 46, beispielsweise Classical CAN-Nachrichten 46. Die Classical CAN-Nachrichten 46 sind gemäß dem Classical Basisformat aufgebaut, bei welchem in der Nachricht 46 eine Anzahl von bis zu 8 Datenbytes umfasst sein können. Alternativ ist die Classical CAN-Nachricht 46 als CAN FD Nachricht aufgebaut, bei welcher eine Anzahl von bis zu 64 Datenbytes umfasst sein können, die noch dazu mit einer deutlich schnelleren Datenrate als bei der Classical CAN-Nachricht 46 übertragen werden. Im letzteren Fall ist die Kommunikationssteuereinrichtung 21 wie ein herkömmlicher CAN FD-Controller ausgeführt.

Die Kommunikationssteuereinrichtung 31 kann ausgeführt sein, um je nach Bedarf eine CAN EL-Nachricht 45 oder eine Classical CAN-Nachricht 46 für die Sende-/Empfangseinrichtung 32 bereitzustellen oder von dieser zu empfangen. Die Kommunikationssteuereinrichtung 31 erstellt und liest also eine erste Nachricht 45 oder zweite Nachricht 46, wobei sich die erste und zweite Nachricht 44, 46 durch ihren Datenübertragungsstandard unterscheiden, nämlich in diesem Fall CAN EL oder CAN. Alternativ ist die Classical CAN-Nachricht 46 als CAN FD Nachricht aufgebaut. Im letzteren Fall ist die Kommunikationssteuereinrichtung 31 wie ein herkömmlicher CAN FD-Controller ausgeführt.

Die Sende-/Empfangseinrichtung 12 kann bis auf die nachfolgend noch genauer beschriebenen Unterschiede als CAN EL-Transceiver ausgeführt sein. Die Sende-/Empfangseinrichtung 22 kann wie ein herkömmlicher CAN Transceiver oder CAN FD Transceiver ausgeführt sein. Die Sende-/Empfangseinrichtung 32 kann ausgeführt sein, um je nach Bedarf Nachrichten 45 gemäß dem CAN EL-Format oder Nachrichten 46 gemäß dem derzeitigen CAN-Basisformat für die Kommunikationssteuereinrichtung 31 bereitzustellen oder von dieser zu empfangen. Die Sende-/Empfangseinrichtungen 12, 32 sind zusätzlich oder alternativ wie ein herkömmlicher CAN FD Transceiver ausführbar.

Mit den beiden Teilnehmerstationen 10, 30 ist eine Bildung und dann Übertragung von Nachrichten 45 mit dem CAN EL Format sowie der Empfang solcher Nachrichten 45 realisierbar.

Fig. 2 zeigt für die Nachricht 45 einen CAN EL Rahmen 450, wie er von der Sende-/Empfangseinrichtung 12 oder der Sende-/Empfangseinrichtung 32 gesendet wird. Der CAN EL-Rahmen 450 ist für die CAN-Kommunikation auf dem Bus 40 in unterschiedliche Kommunikationsphasen 451 bis 453 unterteilt, nämlich eine Arbitrationsphase 451, eine Datenphase 452 und eine Rahmenendphase 453.

In der Arbitrationsphase 451 wird mit Hilfe eines Identifizierers bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der anschließenden Datenphase 452 einen exklusiven Zugriff auf den Bus 40 des Bussystems 1 bekommt.

In der Datenphase 452 werden die Nutzdaten des CAN-EL-Rahmens bzw. der Nachricht 45 gesendet. Die Nutzdaten können entsprechend dem Wertebereich eines Datenlängecodes beispielsweise bis zu 4096 Bytes oder einen größeren Wert aufweisen.

In der Rahmenendphase 453 kann beispielsweise in einem Prüfsummenfeld eine Prüfsumme über die Daten der Datenphase 452 einschließlich der Stuffbits enthalten sein, die vom Sender der Nachricht 45 nach jeweils einer vorbestimmten Anzahl von gleichen Bits, insbesondere 10 gleichen Bits, als inverses Bit eingefügt werden. Zudem kann in einem Endefeld in der Rahmenendphase 453 mindestens ein Acknowledge-Bit enthalten sein. Außerdem kann eine Folge von 11 gleichen Bits vorhanden sein, welche das Ende des CAN EL Rahmens 450 anzeigen. Mit dem mindestens einen Acknowledge-Bit kann mitgeteilt werden, ob ein Empfänger in dem empfangenen CAN EL Rahmen 450 bzw. der Nachricht 45 einen Fehler entdeckt hat oder nicht.

In der Arbitrationsphase 451 und der Rahmenendphase 453 wird ein Physical Layer wie bei CAN und CAN-FD verwendet. Der Physical Layer entspricht der Bitübertragungsschicht oder Schicht 1 des bekannten OSI-Modells (Open Systems Interconnection Modell).

Ein wichtiger Punkt während der Phasen 451, 453 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Zuständen auf dem Bus 40 überschrieben werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit etwa 2 Megabit pro Sekunde im realen Fahrzeug-Einsatz.

Ein Sender der Nachricht 45 beginnt ein Senden von Bits der Datenphase 452 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat.

Ganz allgemein können in dem Bussystem mit CAN EL im Vergleich zu CAN oder CAN FD folgende abweichenden Eigenschaften realisiert werden:
a) Übernahme und ggf. Anpassung bewährter Eigenschaften, die für die Robustheit und Anwenderfreundlichkeit von CAN und CAN FD verantwortlich sind, insbesondere Rahmenstruktur mit Identifier und Arbitrierung nach dem CSMA/CR-Verfahren,
b) Steigerung der Netto-Datenübertragungsrate auf etwa 10 Megabit pro Sekunde,
c) Anheben der Größe der Nutzdaten pro Rahmen auf etwa 4kbyte.

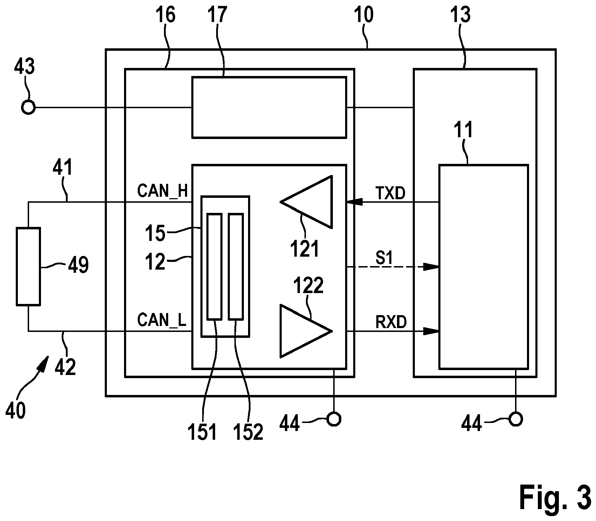

Fig. 3 zeigt den grundlegenden Aufbau der Teilnehmerstation 10 mit der Kommunikationssteuereinrichtung 11, der Sende-/Empfangseinrichtung 12 und der Empfangsschwellen-Anpasseinrichtung 15. Die Teilnehmerstation 30 ist in ähnlicher Weise aufgebaut, wie in Fig. 3 gezeigt, außer dass die Empfangsschwellen-Anpasseinrichtung 35 nicht in die Sende-/ Empfangseinrichtung 32 integriert ist, sondern separat von der Kommunikationssteuereinrichtung 31 und der Sende-/Empfangseinrichtung 32 vorgesehen ist. Daher werden die Teilnehmerstation 30 und die Empfangsschwellen-Anpasseinrichtung 35 nicht separat beschrieben. Die nachfolgend beschriebenen Funktionen der Einrichtung 15 sind bei der Einrichtung 35 identisch vorhanden.

Gemäß Fig. 3 hat die Teilnehmerstation 10 zusätzlich zu der Kommunikationssteuereinrichtung 11, der Sende-/Empfangseinrichtung 12 und der Einrichtung 15 zudem einen Mikrocontroller 13, welchem die Kommunikationssteuereinrichtung 11 zugeordnet ist, und eine System-ASIC 16 (ASIC = Anwendungsspezifische Integrierte Schaltung), die alternativ ein System Basis-Chip (SBC) sein kann, auf dem mehrere für eine Elektronik-Baugruppe der Teilnehmerstation 10 notwendige Funktionen zusammengefasst sind. In dem System-ASIC 16 ist zusätzlich zu der Sende-/Empfangseinrichtung 12 eine Energieversorgungseinrichtung 17 eingebaut, welche die Sende-/Empfangseinrichtung 12 mit elektrischer Energie versorgt. Die Energieversorgungseinrichtung 17 liefert üblicherweise eine Spannung CAN_Supply von 5 V. Je nach Bedarf kann die Energieversorgungseinrichtung 17 jedoch eine andere Spannung mit einem anderen Wert liefern. Zusätzlich oder alternativ kann die Energieversorgungseinrichtung 17 als Stromquelle ausgestaltet sein. Die Empfangsschwellen-Anpasseinrichtung 15 hat eine Auswerteeinheit 151 und eine Anpasseinheit 152.

Optional ist zwischen der Kommunikationssteuereinrichtung 11 und der Sende-/Empfangseinrichtung 12 eine separate Leitung vorhanden, über welche ein zusätzliches Signal S1 gesendet werden, mit welchem der Kommunikationssteuereinrichtung 11 ein Sendekonflikt auf dem Bus 40 in der Datenphase 452 mitgeteilt werden kann, wie nachfolgend noch genauer beschrieben.

Die Sende-/Empfangseinrichtung 12 hat zudem einen Sender 121 und einen Empfänger 122. Auch wenn nachfolgend immer von der Sende-/Empfangseinrichtung 12 gesprochen ist, ist es alternativ möglich, den Empfänger 122 in einer separaten Einrichtung extern von dem Sender 121 vorzusehen. Der Sender 121 und der Empfänger 122 können wie bei einer herkömmlichen Sende-/Empfangseinrichtung 22 aufgebaut sein. Der Sender 121 kann insbesondere mindestens einen Operationsverstärker und/oder einen Transistor aufweisen. Der Empfänger 122 kann insbesondere mindestens einen Operationsverstärker und/oder einen Transistor aufweisen.

Die Sende-/Empfangseinrichtung 12 ist an den Bus 40 angeschlossen, genauer gesagt dessen erste Busader 41 für CAN_H oder CAN-EL_H und dessen zweite Busader 42 für CAN_L oder CAN-EL_L. Über mindestens einen Anschluss 43 erfolgt die Spannungsversorgung für die Energieversorgungseinrichtung 17 zum Versorgen der ersten und zweiten Busader 41, 42 mit elektrischer Energie, insbesondere mit der Spannung CAN-Supply. Die Verbindung mit Masse bzw. CAN_GND ist über einen Anschluss 44 realisiert. Die erste und zweite Busader 41, 42 sind mit einem Abschlusswiderstand 49 terminiert.

Die erste und zweite Busader 41, 42 sind in der Sende-/Empfangseinrichtung 12 nicht nur mit dem Sender 121, der auch als Transmitter bezeichnet wird, und mit dem Empfänger 122 verbunden, der auch als Receiver bezeichnet wird, auch wenn die Verbindung in Fig. 3 zur Vereinfachung nicht gezeigt ist. Die erste und zweite Busader 41, 42 sind in der Sende-/Empfangseinrichtung 12 auch mit der Einrichtung 15 verbunden.

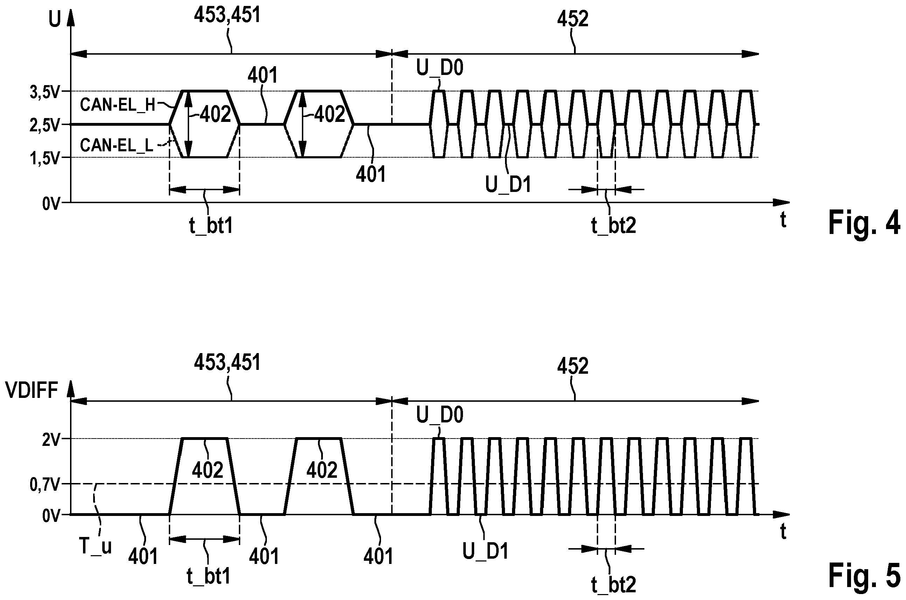

Im Betrieb des Bussystems 1 setzt der Sender 121 ein Sendesignal TXD oder TxD der Kommunikationssteuereinrichtung 11 in entsprechende Signale CAN-EL_H und CAN-EL_L für die Busadern 41, 42 um und sendet diese Signale CAN-EL_H und CAN-EL_L an den Anschlüssen für CAN_H und CAN_L auf den Bus 40, wie in Fig. 4 gezeigt.

Der Empfänger 122 bildet aus von Bus 40 empfangenen Signalen CAN-EL_H und CAN-EL_L gemäß Fig. 4 ein Empfangssignal RXD oder RxD und gibt dieses an die Kommunikationssteuereinrichtung 11 weiter, wie in Fig. 3 gezeigt. Mit Ausnahme eines Leerlauf- oder Bereitschaftszustands (Idle oder Standby), hört die Sende-/Empfangseinrichtung 12 mit dem Empfänger 122 im Normalbetrieb immer auf eine Übertragung von Daten bzw. Nachrichten 45, 46 auf dem Bus 40 und zwar unabhängig davon, ob die Sende-/Empfangseinrichtung 12 Sender der Nachricht 45 ist oder nicht.

Gemäß dem Beispiel von Fig. 4 haben die Signale CAN-EL_H und CAN-EL_L in den zuvor genannten Kommunikationsphasen 451, 453 die dominanten und rezessiven Buspegel 401, 402, wie von CAN bekannt. Dagegen unterscheiden sich die Signale CAN-EL_H und CAN-EL_L in der Datenphase 452 von den herkömmlichen Signalen CAN_H und CAN_L, wie nachfolgend noch genauer beschrieben. Auf dem Bus 40 bildet sich ein Differenzsignal VDIFF = CAN-EL_H - CAN-EL_L aus, das in Fig. 5 gezeigt ist.

Wie aus dem linken Teil von Fig. 4 ablesbar, treibt der Sender 121 nur in den zuvor genannten Kommunikationsphasen 451, 453 die dominanten Zustände 402 der differentiellen Signale CAN-EL_H, CAN-EL_L unterschiedlich. Dagegen sind die Buspegel auf der Busleitung 3 für die rezessiven Zustände 401 in den zuvor genannten Kommunikationsphasen 451, 453 gleich der Spannung Vcc bzw. CAN-Supply von beispielsweise etwa 2,5 V. Somit ergibt sich für eine Spannung VDIFF = CAN-EL_H - CAN-EL_L für die rezessiven Zustände 401 (logische '0' des Sendesignals TxD) ein Wert von 0V und für die dominanten Zustände 402 (logische ,1' des Sendesignals TxD) ein Wert von ca. 2,0 V.

Erkennt die Sende-/Empfangseinrichtung 12, insbesondere deren Einrichtung 15, das Ende der Arbitrationsphase 451, so wird der Sender 121 von dem Zustand, der in dem linken Teil von Fig. 4 gezeigt ist, für die Datenphase 452 in den Zustand umgeschaltet, der im rechten Teil von Fig. 4 gezeigt ist. Der Sender 121 wird somit von einer ersten Betriebsart in eine zweite Betriebsart umgeschaltet.

Gemäß dem rechten Teil von Fig. 4 stellen sich in der schnelleren Datenphase 452 für die Signale CAN-EL_H, CAN-EL_L die Buszustände U_D0, U_D1 entsprechend den Datenzuständen Data_0 und Data_1 des Sendesignals TXD ein. Hierfür treibt der Sender 121 die dominanten Zustände 402 der differentiellen Signale CAN-EL_H, CAN-EL_L wieder unterschiedlich, wie in den zuvor genannten Kommunikationsphasen 451, 453. Dagegen werden die rezessiven Zustände 401 teilweise bis vollständig von dem Sender 121 bzw. der Sende-/ Empfangseinrichtung 12 getrieben. Hierfür führt der Sender 121 bzw. die Sende-/ Empfangseinrichtung 12 beim Übergang von Dominant zu Rezessiv für eine kurze Zeit die beiden Busadern 41, 42 aktiv zusammen und dämpft somit die Schwingungen der Busadern 41, 42. Somit werden die rezessiven Zustände 401 in den zuvor genannten Kommunikationsphasen 451, 453 anders erzeugt als die rezessiven Zustände U_D1 in der Datenphase 452. In anderen Worten, die Erzeugung der rezessiven Zustände 401 in den Kommunikationsphasen 451, 453 unterscheidet sich von der Erzeugung der rezessiven Zustände U_D1 in der Datenphase 452.

Die Abfolge der Datenzustände Data_0 und Data_1 und somit der daraus resultierenden Buszustände U_D0, U_D1 für die Signale CAN-EL_H, CAN-EL_L in Fig. 4 und der daraus resultierende Verlauf der Spannung VDIFF von Fig. 5 dient nur der Veranschaulichung der Funktion der Sende-/Empfangseinrichtung 10. Die Abfolge der Datenzustände Data_0 und Data_1 und somit der Buszustände U_D0, U_D1 ist je nach Bedarf wählbar.

Bei den in Fig. 4 gezeigten und zuvor beschriebenen Zuständen sind auf der Busleitung des Busses 40 bei dem Zustand Data_0 die Buspegel in allen Kommunikationsphasen 451 bis 453 gleich und liegen bei etwa 2,5 V, wie in Fig. 5 veranschaulicht.

Mit anderen Worten erzeugt der Sender 121 in einer ersten Betriebsart gemäß Fig. 4 einen ersten Datenzustand, beispielsweise Data_0, als Buszustand 402 mit unterschiedlichen Buspegeln für zwei Busadern 41, 42 der Busleitung und einen zweiten Datenzustand, beispielsweise Data_1, als Buszustand 401 mit demselben Buspegel für die zwei Busadern 41, 42 der Busleitung des Busses 40.

Außerdem treibt der Sender 121, für die zeitlichen Verläufe der Signale CAN-EL_H, CAN-EL_L in einer zweiten Betriebsart, welche die Datenphase 452 umfasst, den ersten und zweiten Datenzustand Data_0, Data_1 jeweils zumindest teilweise, so dass sich die Buszustände U_D0, U_D1 von Fig. 4 und Fig. 5 für die zwei Busadern 41, 42 der Busleitung des Busses 40 ausbilden. Der Unterschied zwischen dem Physical Layer von CAN in den Kommunikationsphasen 453, 451 und den zuvor beschriebenen Physical Layer CAN FD SIC in der Datenphase 452 liegt darin, dass die Rezessivzustände U_D1 in der Datenphase 452 teilweise bis vollständig vom Sender 121 bzw. der Sende-/Empfangseinrichtung 12 getrieben werden. Bei einer Bitrate von 10Mbit/s in der Datenphase 452 beträgt eine Bitzeit 100ns. Die Schwingungen im realen Bussystem 1 dauern üblicherweise bis zu einigen hundert Nanosekunden, das heißt der Dämpfungsschaltkreis von CAN-FD-SIC ist die komplette rezessive Bitzeit t_b2 (=100ns) über aktiv.

Somit ist, die Bitzeitdauer t_bt2 in der Datenphase 452 bei dem gezeigten Beispiel von Fig. 4 und Fig. 5 deutlich kürzer als die Bitzeitdauer t_bt1, die in der Arbitrationsphase 451 und der Rahmenendphase 453 verwendet wird. Daher wird in der Datenphase 452 mit einer größeren Bitrate gesendet als in der Arbitrationsphase 451 und der Rahmenendphase 453. Auf diese Weise lässt sich die Übertragungsgeschwindigkeit im Bussystem 1 noch weiter steigern als bei CAN FD.

Wie in Fig. 5 dargestellt, verwendet der Empfänger 122 in den Kommunikationsphasen 451, 453 die von CAN/CAN-FD bekannte erste Empfangsschwelle T_u mit der typischen Lage von 0,7 V gemäß der ISO11898-2:2016, um die Buszustände 401, 402 in der ersten Betriebsart sicher erkennen zu können.

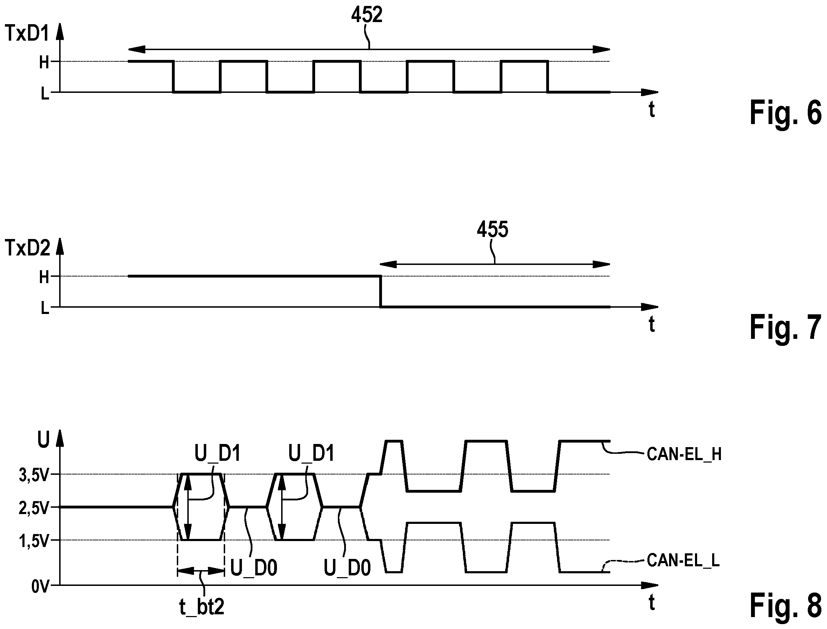

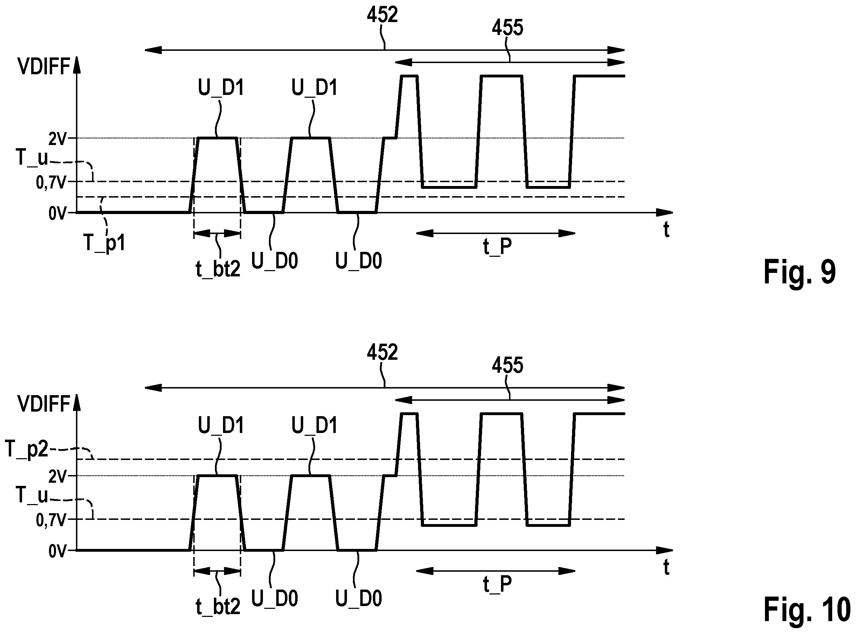

Wie in Bezug auf Fig. 6 bis Fig. 9 beschrieben, verwendet der Empfänger 122 in der Datenphase 452 zusätzlich eine Empfangsschwelle T_p1 welche bei etwa 0,3 V liegt, die in Fig. 9 gezeigt ist. Hierfür passt die Empfangsschwellen-Anpasseinrichtung 15 die bisher nur eine verwendete Empfangsschwelle T_u für den Empfänger 122 auf die zwei Empfangsschwellen T_u, T_p1 an bzw. schaltet die Empfangsschwelle T_p1 zu der Empfangsschwelle T_u hinzu.

Fig. 6 bis Fig. 9 zeigen für die Datenphase 452 einen Signalverlauf der Signale TxD1, TxD2, CAN-EL_H und CAN-EL_L und deren Differenzspannung VDIFF = CAN-EL_H - CAN-EL_L. Bei dem in Fig. 6 bis Fig. 9 gezeigten Fall, sendet beispielsweise der Sender 121 das Sendesignal TxD1 für einen Rahmen 450, wobei beispielsweise die Teilnehmerstation 30, die in der Datenphase 452 eigentlich nur Empfänger des Rahmens 450 ist, einen Abbruch des Rahmens 450 erreichen möchte.

Es gibt verschiedene Gründe, warum ein Abbruch des Rahmens 450 erfolgen soll:
- die Teilnehmerstation 30 als RX-Teilnehmerstation hat eine Nachricht 45, 46 mit höherer Priorität zu senden, und/oder
- die Teilnehmerstation 30 als RX-Teilnehmerstation hat einen Fehler in der Header Prüfsumme (CRC = Cyclic Redundancy Check) der CAN EL Nachricht 45 festgestellt, und möchte dies signalisieren, und/oder
- die Teilnehmerstation 20, die eine CAN FD Teilnehmerstation ist, hat eventuell das Umschalten zu dem Format des Rahmens 450 aufgrund eines Bit Fehlers nicht erkannt und sendet einen Fehlerrahmen 47 während der Datenphase 452 des Rahmens 450.

Möchte beispielsweise die Teilnehmerstation 30 einen Abbruch des Rahmens 450 erreichen, welchen der Sender 121 mit dem Signal TxD1 von Fig. 6 sendet, so sendet die Teilnehmerstation 30 das Sendesignal TxD2 gemäß Fig. 7 zum Bus 40. In Folge dessen stellen sich die Signalverläufe für CAN-EL_H und CAN-EL_L und deren Differenzspannung VDIFF ein. In der Phase 455 des Sendens des Fehlerrahmens 47, die mit der fallenden Flanke des Sendesignals TxD2 beginnt, ergeben sich daher Spannungszustände auf dem Bus 40, die von den Spannungszuständen auf dem Bus 40 im Normalbetrieb der Datenphase 452 abweichen.

Ganz allgemein gilt, dass die sendende Teilnehmerstation, die das Sendesignal TxD1 sendet, in der Datenphase 452 zum Treiben der Busleitung auf einen Betriebsmodus umschaltet, wohingegen für alle empfangenden Teilnehmerstationen, wie die Teilnehmerstation 30, die unterschiedlichen in Fig. 9 gezeigten Empfangsschwellen Td, T_p1 eingeschaltet werden, wie nachfolgend beschrieben. Hierbei bleibt jedoch der Bustreiber der empfangenden Teilnehmerstation 30 im passiven Empfangszustand (CAN-recessive-state), bis die empfangende Teilnehmerstation 30 eventuell den Fehlerrahmen 47 sendet, wie in Fig. 7 für das Sendesignal TxD2 gezeigt und zuvor erwähnt. Der Fehlerrahmen 47 gemäß dem rechten Teil von Fig. 7 wird dann aktiv als "dominant" gesendet werden.

Wird in dem zuvor beschriebenen Fall von Teilnehmerstation 30 ein Fehlerrahmen 47 gesendet, wird in der Folge aus Sicht aller Teilnehmerstationen 10, 20, 30 ein Bit mit positiver Differenzspannung VDIFF, also der Buszustand U_D0, noch verstärkt bzw. die positive Differenzspannung VDIFF wird vergrößert. Dagegen wird ein rezessives Bit, das sich als der Buszustand U_D1 auf dem Bus 40 ausbildet, von der Differenzspannung VDIFF = 0 V auf eine Differenzspannung VDIFF von etwa 2V/2 erhöht. Der entstehende Spannungswert für den Buszustand U_D1 hängt stark von den Parametern der treibenden Sende- /Empfangseinrichtungen 12, 22, 32 bzw. des Senders 121 ab. Mit der konventionellen Empfangsschwelle T_u von typischerweise 0,7V kann jetzt nicht erkannt werden, ob ein Konflikt durch einen Fehlerrahmen 47 (Error-Flag) besteht.

Daher ist die zweite Empfangsschwelle T_p1 der Datenphase 452 derart eingestellt, dass die Differenzspannung VDIFF zwar die erste Empfangsschwelle T_u unterschreitet, die zweite Empfangsschwelle T_p1 jedoch nicht. Somit kann der Konflikt erkannt
werden, für den Fall, dass ein rezessives Bit gesendet werden soll, also der Buszustand U_D1 beabsichtigt ist, und dieser Buszustand von einem Fehlerrahmens 47 überlagert wird.

Erfasst der Empfänger 122 der Teilnehmerstation 10 also, dass die Differenzspannung VDIFF die Empfangsschwelle T_p1 nicht mehr unterschreitet, so erkennt der Empfänger 122, dass ein Sendekonflikt auf den Bus 40 vorliegt. Der Sender 121 hat nämlich in der Datenphase 452 keinen exklusiven, kollisionsfreien Zugriff mehr auf den Bus 40. Der Empfänger 122 erkennt diesen Sendekonflikt auf dem Bus 40, wenn gilt TxD1 = H (high) UND T_p1 nicht unterschritten (innerhalb der laufzeitkompensierten Bitzeit t_bt2).

Bei der beschriebenen Bewertung, ob ein Sendekonflikt vorliegt oder nicht, berücksichtigt der Empfänger 122 bzw. die Sende-/Empfangseinrichtung 12 die Signal-Laufzeiten im Bussystem 1, durch die sich ein zeitlicher Versatz des Sendesignals TXD zu den Signalen CAN-EL_H und CAN-EL_L auf dem Bus 40 bis hin zum Ausgang des Empfängers 122 ergibt, an dem das Empfangssignal RXD ausgegeben wird. Die Laufzeiten werden für die beschriebene Bewertung kompensiert. Insbesondere werden die Laufzeiten der Signale CAN-EL_H und CAN-EL_L auf dem Bus 40 für die beschriebene Bewertung kompensiert.

Die Signalisierung des Konflikts in der Datenphase 452 erfolgt durch ein Signal von dem Empfänger 122 bzw. der Sende-/Empfangseinrichtung 12 an die Kommunikationssteuereinrichtung 11. Das Signal kann das Empfangssignal RXD sein, welches der Empfänger 122 bzw. der Sende-/Empfangseinrichtung 12 mit einem vorbestimmen Bitmuster abändert, um den Konflikt zu signalisieren. Alternativ oder zusätzlich kann der Empfänger 122 bzw. der Sende-/Empfangseinrichtung 12 ein separates Signal S1 erzeugen, das über eine separate Signalleitung an die Kommunikationssteuereinrichtung 11 gesendet wird und insbesondere mindestens einen Schaltimpuls oder ein vorbestimmtes Bitmuster zur Signalisierung des Konflikts hat. Weil in der Datenphase 452 der Sendekonflikt an die Kommunikationssteuereinrichtung 11 signalisiert wird, kann die im klassischen CAN herkömmliche Bitfehler-Prüfung durch den Vergleich von Sendesignal TXD mit Empfangssignal RXD ersetzt werden durch die Prüfung des Konfliktsignalisierungs-Signals. Das Konfliktsignalisierungs-Signal hat insbesondere ein vorbestimmtes Bitmuster, das den Sendekonflikt signalisiert. Insbesondere kann das Konfliktsignalisierungs-Signal eine '1' als "OK-Signal" und eine '0' als "Konflikt-Meldung" senden.

Die Kommunikationssteuereinrichtung 11 reagiert in der Datenphase 452 auf den signalisierten Sendekonflikt mit dem Abbruch der Datenphase 452 und gegebenenfalls zusätzlich mit dem Senden eines Bitmusters, das den anderen Teilnehmerstationen 20, 30 das Ende der Datenphase 452 signalisiert.

Gemäß einer Modifikation der zuvor beschriebenen Bewertung wird in einer weiteren Variante die Empfangsschwelle T_p1 in einem definierten Zeitfenster t_P gemäß Fig. 9 daraufhin geprüft, ob die Differenzspannung VDIFF die Empfangsschwelle T_p1 nicht mehr unterschreitet. Dabei ist das Zeitfenster t_P insbesondere derart gewählt, dass bei der Datenübertragung in der Daten-Phase 452 die Empfangsschwelle T_p1 zumindest zwei Mal unterschritten werden müsste. Ist dies nicht der Fall, erkennt der Empfänger 122 bzw. die Sende-/Empfangseinrichtung 12, dass der Sendekonflikt vorliegt und erzeugt das Empfangssignal und/oder das Signal S1 entsprechend.

Der Vorteil der genannten Modifikation bzw. zweiten Variante ist, dass die Betrachtung des Sendesignals TxD1 und dessen Laufzeit-Kompensation nicht notwendig ist.

Optional ist das Zeitfenster t_P wählbar konfigurierbar. Damit ist der Empfänger 122 bzw. die Sende-/Empfangseinrichtung 12 sehr vorteilhaft an die jeweiligen Gegebenheiten des Bussystems 1 anpassbar.

Besonders vorteilhaft an den zuvor beschriebenen Varianten der Bewertung ist, dass die Ausgestaltung des Empfängers 122 bzw. der Sende-/Empfangseinrichtung 12 sowohl für homogene CAN-EL-Bussysteme, bei welchen nur CAN EL Nachrichten 45 und keine CAN FD Nachrichten 46 versandt werden, als auch für gemischte Bussysteme einsetzbar ist, bei welchen entweder CAN EL Nachrichten 45 oder CAN FD Nachrichten 46 versandt werden. Daher ist der Empfänger 122 bzw. die Sende-/Empfangseinrichtung 12 universell einsetzbar.

Fig. 10 veranschaulicht eine Ausgestaltung der Empfangsschwellen-Anpasseinrichtung 15 und des Empfängers 122 bzw. der Sende-/Empfangseinrichtung 12 gemäß einem ersten Ausführungsbeispiel. Die Empfangsschwellen-Anpasseinrichtung 15 und der Empfänger 122 bzw. die Sende-/Empfangseinrichtung 12 gemäß dem vorliegenden Ausführungsbeispiel sind bis auf die nachfolgend beschriebenen Unterschiede ausgeführt, wie die Empfangsschwellen-Anpasseinrichtung 15 und der Empfänger 122 bzw. die Sende-/Empfangseinrichtung 12 gemäß der vorangehenden Anordnung.

Gemäß Fig. 10 schaltet die Empfangsschwellen-Anpasseinrichtung 15 in der Datenphase anstelle der zweiten Empfangsschwelle T_p1 eine dritte Empfangsschwelle T_p2 ein. Somit kann der Empfänger 122 die Empfangsschwelle T_p2 zusätzlich zu der Empfangsschwelle T_u zur Bewertung heranziehen, um die Spannungspegel der Differenzspannung VDIFF bei TxD1 = H zu erkennen, wie zuvor beschrieben.

Wird die Empfangsschwelle T_p2 im Falle eines gesendeten dominanten Buszustands U_D0 überschritten, so liegt der Konflikt vor. Die Empfangsschwelle T_p2 liegt über der maximalen Differenzspannung VDIFF_max einer einzelnen Sende-/Empfangseinrichtung 12, so dass gilt T_p2 > VDIFF_max. Die maximale Differenzspannung VDIFF ist in der ISO11898-2:2016 festgelegt.

Der Konflikt wird durch den Transceiver bei folgenden Bedingungen erkannt:
TxD1 = L (low) UND T_p2 überschritten (innerhalb der laufzeitkompensierten Bitzeit t_bt2).

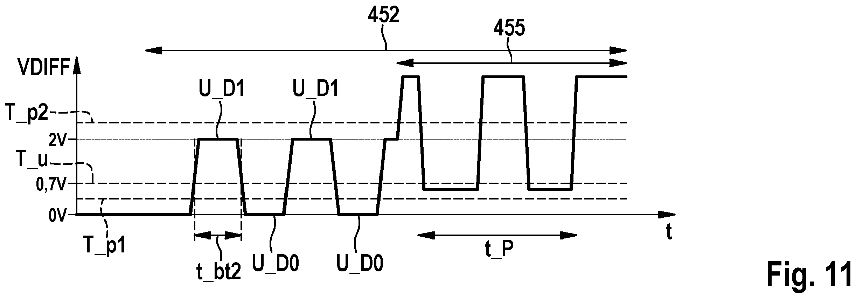

In einer Modifikation des zuvor beschriebenen Ausführungsbeispiels wird die Empfangsschwelle T_p2 nicht fest auf den zuvor genannten Wert eingestellt. Stattdessen wird beim Senden des Senders 121 bzw. der Sende-/Empfangseinrichtung 12 in einem adaptiven Verfahren die typische Differenzspannung VDIFF für ein dominantes Bit im konfliktfreiem Zustand ermittelt und die Empfangsschwelle T_p2 infolgedessen in einem Spannungs-Offset über diesen ermittelten Wert gesetzt. Diese Ausführung kann auf alle Varianten angewendet werden, welche die Empfangsschwelle T_p2 verwenden. Fig. 11 veranschaulicht eine Ausgestaltung der Empfangsschwellen-Anpasseinrichtung 15 und des Empfängers 122 bzw. der Sende-/Empfangseinrichtung 12 gemäß einem zweiten Ausführungsbeispiel. Die Empfangsschwellen-Anpasseinrichtung 15 und der Empfänger 122 bzw. die Sende-/Empfangseinrichtung 12 gemäß dem vorliegenden Ausführungsbeispiel sind bis auf die nachfolgend beschriebenen Unterschiede ausgeführt, wie die Empfangsschwellen-Anpasseinrichtung 15 und der Empfänger 122 bzw. die Sende-/Empfangseinrichtung 12 gemäß dem vorangehenden Ausführungsbeispiel.

Gemäß Fig. 11 schaltet die Empfangsschwellen-Anpasseinrichtung 15 in der Datenphase 452 sowohl die zweite Empfangsschwelle T_p1 als auch die dritte Empfangsschwelle T_p2 ein. Als Folge davon kann der Empfänger 122 die Empfangsschwelle T_p2 zusätzlich zu den Schwellen T_u, T_p1 zur Bewertung heranziehen, um den Spannungspegel der Differenzspannung VDIFF bei TxD1 = H zu erkennen, wie zuvor beschrieben.

Die Empfangsschwelle T_p2 hat einen Wert, der größer als der größte Spannungswert ist, der von einer Teilnehmerstation 10, 20, 30 des Bussystems 1 für einen Buszustand in der zweiten Kommunikationsphase 452 getrieben wird. Mit der Empfangsschwelle T_p2 ist ein Sendekonflikt erkennbar, der auftritt, wenn ein Buszustand U_D0, der von der Sende-/Empfangseinrichtung 12 aufgrund des Sendesignals TxD1 auf dem Bus 40 erzeugt wird, durch einen Fehlerrahmen 47 verstärkt wird, wobei der Fehlerrahmen 47 als dominant oder auch U_D0 getrieben wird.

Somit kann plausibilisiert werden, dass ein Sendekonflikt auf dem Bus 40 vorliegt, insbesondere der Konfliktfall des Sendens eines Fehlerrahmens 47 (Error Flag).

Als Folge davon kann in dem Empfangssignal RXD oder dem Signal S1 an die Kommunikationssteuereinrichtung 11 signalisiert werden, welcher Sendekonflikt aufgetreten ist. Somit kann die Kommunikationssteuereinrichtung 11 nicht nur den Abbruch der Datenphase 452 vornehmen, sondern gegebenenfalls zusätzlich mit dem Senden eines Bitmusters den anderen Teilnehmerstationen 20, 30 das Ende der Datenphase 452 signalisieren und optional Angaben über die Art des Sendekonflikts mitteilen.

Gemäß einem dritten Ausführungsbeispiel ist der Empfänger 122 bzw. die Sende-/Empfangseinrichtung 12 gemäß einem der vorangehenden Ausführungsbeispiele zusätzlich ausgestaltet, eine Bewertung der jeweils vorhandenen Empfangsschwellen T_u, T_p1, T_p2 und eine Bewertung der zeitlichen Korrelation zwischen dem Sendesignal TXD bzw. TxD1und dem empfangenen Signal RXD der jeweiligen Teilnehmerstation 10, 30 vorzunehmen.

Alle zuvor beschriebenen Ausgestaltungen der Einrichtungen 15, 35, der Teilnehmerstationen 10, 20, 30, des Bussystems 1 und des darin ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Auch wenn die Erfindung zuvor am Beispiel des CAN-Bussystems beschrieben ist, kann die Erfindung bei jedem Kommunikationsnetzwerk und/oder Kommunikationsverfahren eingesetzt werden, bei welchem zwei verschiedene Kommunikationsphasen verwendet werden, in denen sich die Buszustände unterscheiden, die für die unterschiedlichen Kommunikationsphasen erzeugt werden. Insbesondere ist die Erfindung bei Entwicklungen von sonstigen seriellen Kommunikationsnetzwerken, wie Ethernet und/oder 100 Base-T1 Ethernet, Feldbussystemen, usw. einsetzbar.

Insbesondere kann das Bussystem 1 gemäß den Ausführungsbeispielen ein Kommunikationsnetzwerk sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 20 in dem Bussystem 1 entfallen. Es ist möglich, dass eine oder mehrere der Teilnehmerstationen 10 oder 30 in dem Bussystem 1 vorhanden sind. Denkbar ist, dass alle Teilnehmerstationen in dem Bussystem 1 gleich ausgestaltet sind, also nur Teilnehmerstation 10 oder nur Teilnehmerstation 30 vorhanden sind.

Die Anzahl der Empfangsschwellen T_p1, T_p2, die zu der ersten Empfangsschwelle T_u hinzugeschaltet werden, kann auch noch weiter erhöht werden, als zuvor beschrieben. Dadurch kann die Plausibilisierung der Erfassung eines Sendekonflikts noch weiter verbessert werden. Jedoch steigt der Aufwand der Auswertung der Schwellen mit der Anzahl der zugeschalteten Empfangsschwellen T_p1, T_p2.

Alle zuvor beschriebenen Varianten für die Erkennung des Sendekonflikts können zeitlicher Filterung unterliegen, um die Robustheit in Bezug auf elektromagnetische Verträglichkeit (EMV) und gegenüber elektrostatischer Aufladung (ESD), Pulsen und anderen Störungen zu erhöhen.

## Patentansprüche

1. Einrichtung (12; 16; 32) für ein serielles Bussystem (1), mit
einem Empfänger (122) zum Empfang eines Signals von einem Bus (40) des Bussystems (1), bei welchem für eine Nachricht (45), die zwischen Teilnehmerstationen (10, 20, 30) des Bussystems (1) ausgetauscht wird, ein rezessiver Buszustand (401, U_D1) von einem dominanten Buszustand (402, U_D0) überschreibbar ist und der rezessive Buszustand (401) in einer ersten Kommunikationsphase (451; 453, 451) anders erzeugt wird als der rezessive Buszustand (U_D1) in einer zweiten Kommunikationsphase (452),
wobei der Empfänger (122) ausgestaltet ist, auf der Grundlage des von dem Bus (40) empfangenen Signals ein digitales Signal (RXD; S1) zu erzeugen und das Signal (RXD; S1) an eine Kommunikationssteuereinrichtung (11) zum Auswerten der in dem digitalen Signal (RXD; S1) enthaltenen Daten auszugeben,
wobei der Empfänger (122) zudem ausgestaltet ist, in der zweiten Kommunikationsphase (452) zur Erzeugung des digitalen Signals (RXD; S1) mindestens eine erste Empfangsschwelle (T_u) und eine zweite Empfangsschwelle (T_p1; T_2; T_p1, T_p2) zu verwenden, und
wobei die zweite Empfangsschwelle (T_p1; T_2; T_p1, T_p2) einen Spannungswert hat, der kleiner als der Spannungswert der ersten Empfangsschwelle (T_U) oder größer als der größte Spannungswert ist, der sich im Normalbetrieb für einen dominanten Buszustand (U_D0) in der zweiten Kommunikationsphase (452) auf dem Bus (40) einstellt,
**dadurch gekennzeichnet, dass**
der Empfänger (122) ausgestaltet ist, in der zweiten Kommunikationsphase (452) zur Erzeugung des digitalen Signals (RxD) zusätzlich eine dritte Empfangsschwelle (T_p2) zu verwenden, die einen Spannungswert hat, der größer als der größte Spannungswert ist, der von einer Teilnehmerstation (10, 20, 30) des Bussystems (1) für einen Buszustand in der zweiten Kommunikationsphase (452) getrieben wird,
wobei für den Empfänger (122) mit der zweiten Empfangsschwelle (T_p1) ein anderer Sendekonflikt erkennbar ist als mit der dritten Empfangsschwelle (T_p2).

2. Einrichtung (12; 16; 32) nach Anspruch 1, wobei der Empfänger (122) ausgestaltet ist, mindestens die zweite Empfangsschwelle (T_p1; T_p2; T_p1, T_p2) in einem definierten Zeitfenster (t_P) daraufhin zu prüfen, ob das vom Bus (40) empfangene Signal (VDIFF) die zweite Empfangsschwelle (T_p1; T_p2; T_p1, T_p2) nicht mehr unterschreitet oder überschreitet.

3. Einrichtung (12; 16; 32) nach einem der vorangehenden Ansprüche, wobei die Buszustände (401, 402) des in der ersten Kommunikationsphase (451; 453, 451) von dem Bus (40) empfangenen Signals mit einem anderen Physical Layer erzeugt sind als die Buszustände (U_D0, U_D1) des in der zweiten Kommunikationsphase (452) empfangenen Signals.

4. Einrichtung (12; 16; 32) nach einem der vorangehenden Ansprüche, wobei die Buszustände (401, 402) des in der ersten Kommunikationsphase (451; 453, 451) von dem Bus (40) empfangenen Signals eine längere Bitzeit (t_b1) haben als die Buszustände (U_D0, U_D1) des in der zweiten Kommunikationsphase (452) empfangenen Signals.

5. Einrichtung (12; 16; 32) nach einem der vorangehenden Ansprüche, wobei in der ersten Kommunikationsphase (451; 453, 451) ausgehandelt wird, welche der Teilnehmerstationen (10, 20, 30) des Bussystems (1) in der nachfolgenden zweiten Kommunikationsphase (452) einen zumindest zeitweise exklusiven, kollisionsfreien Zugriff auf den Bus (40) bekommt.

6. Einrichtung (12; 16; 32) nach einem der vorangehenden Ansprüche, zudem mit einer Empfangsschwellen-Anpasseinrichtung (15) zur Auswertung des von dem Bus (40) empfangenen Signals in Bezug auf die derzeit vorliegende Kommunikationsphase (451 bis 453) und zur Schaltung des Spannungswerts und der Anzahl der verwendeten Empfangsschwelle(n) (T_p1; T_p2; T_p1, T_p2) auf der Grundlage des Ergebnisses der Auswertung.

7. Einrichtung (12; 16; 32) nach einem der vorangehenden Ansprüche, wobei eine Empfangsschwellen-Anpasseinrichtung (15) zu der ersten Empfangsschwelle (T_u) mindestens eine zweite Empfangsschwelle (T_p1; Tp2; T_p1, T_p2) hinzuschaltet, wenn nach der ersten Kommunikationsphase (451; 453, 451), in welcher kein exklusiver, kollisionsfreier Zugriff einer Teilnehmerstation (10, 20, 30) auf den Bus (40) des Bussystems (1) gewährleistet ist, zu der Kommunikationsphase (452) mit dem exklusiven, kollisionsfreien Zugriff auf den Bus (40) umgeschaltet wird.

8. Einrichtung (12; 16; 32) nach einem der vorangehenden Ansprüche,
zudem mit einem Sender (121) zum Senden von Nachrichten (45) auf einen Bus (40) des Bussystems (1),
wobei der Sender (121) beim Senden der verschiedenen Kommunikationsphasen (451 bis 453) einer Nachricht (45; 46) ausgestaltet ist, zwischen einer ersten Betriebsart und einer zweiten Betriebsart zu schalten.

9. Einrichtung (12; 16; 32) nach Anspruch 8,
wobei der Sender (121) in der ersten Betriebsart ausgestaltet ist, einen ersten Datenzustand als Buszustand (402) mit unterschiedlichen Buspegeln für zwei Busadern (41, 42) der Busleitung (3) zu erzeugen und einen zweiten Datenzustand als Buszustand (401) mit demselben Buspegel für die zwei Busadern (41, 42) der Busleitung (3) zu erzeugen, und
wobei der Sender (121) in der zweiten Betriebsart ausgestaltet ist, einen Buszustand (U_D0) für den ersten Datenzustand zu erzeugen wie in der ersten Betriebsart und den Buszustand (U_D1) für den zweiten Datenzustand (U_D1) anders zu erzeugen als den Buszustand (401) für den zweiten Datenzustand (U_D1) in der ersten Betriebsart.

10. Teilnehmerstation (10; 30) für ein serielles Bussystem (1), mit
einer Kommunikationssteuereinrichtung (11; 31) zum Steuern einer Kommunikation der Teilnehmerstation (10; 30) mit mindestens einer anderen Teilnehmerstation (10; 20; 30) des Bussystems (1), und
einer Einrichtung (12; 16; 32) nach einem der vorangehenden Ansprüche.

11. Teilnehmerstation (10; 30) nach Anspruch 10,
wobei die Einrichtung (12; 16; 32) ausgestaltet ist, der Kommunikationssteuereinrichtung (11; 31) mit dem Empfangssignal (RXD) oder mit einem Signal (S1) über eine separate Leitung zu signalisieren, wenn eine Auswertung der Empfangsschwellen (T_u, T_p1; T_u, T_p2; T_u, T_p1, T_p2) und optional einer zeitlichen Korrelation zwischen dem Sendesignal (TXD; TxD1) und dem Empfangssignal (RXD) ergibt, dass ein Sendekonflikt auf dem Bus (40) vorliegt, und
wobei die Kommunikationssteuereinrichtung (11; 31) ausgestaltet ist, das Sendesignal (TXD; TxD1) auf der Grundlage des Signals (RXD; S1) zu erzeugen oder abzubrechen und/oder anderen Teilnehmerstationen (20; 30) des Bussystems (1) den Sendekonflikt zu signalisieren.

12. Bussystem (1), mit
einem Bus (40), und
mindestens zwei Teilnehmerstationen (10; 20; 30), welche über den Bus (40) derart miteinander verbunden sind, dass sie seriell miteinander kommunizieren können und von denen mindestens eine Teilnehmerstation (10; 30) eine Teilnehmerstation (10; 30) nach Anspruch 10 or 11 ist.

13. Verfahren zur Kommunikation in einem seriellen Bussystem (1), wobei das Verfahren mit einem Empfänger (122) zum Empfang eines Signals von einem Bus (40) des Bussystems (1) ausgeführt wird, und wobei der Empfänger (122) die Schritte ausführt,
Empfangen eines Signals von dem Bus (40) des Bussystems (1), bei welchem für eine Nachricht (45), die zwischen Teilnehmerstationen (10, 20, 30) des Bussystems (1) ausgetauscht wird, ein rezessiver Buszustand (401, U_D1) von einem dominanten Buszustand (402, U_D0) überschreibbar ist und der rezessive Buszustand (401) in einer ersten Kommunikationsphase (451; 453, 451) anders erzeugt wird als der rezessive Buszustand (U_D1) in einer zweiten Kommunikationsphase (452),
Erzeugen eines digitalen Signals (RXD; S1), auf der Grundlage des von dem Bus (40) empfangenen Signals, und
Ausgeben des erzeugten digitalen Signals (RXD; S1) an eine Kommunikationssteuereinrichtung (11) zum Auswerten der in dem digitalen Signal (RXD; S1) enthaltenen Daten,
wobei der Empfänger (122) in der zweiten Kommunikationsphase (452) zur Erzeugung des digitalen Signals (RXD; S1) mindestens eine erste Empfangsschwelle (T_u) und eine zweite Empfangsschwelle (T_p1; T_2; T_p1, T_p2) verwendet, und
wobei die zweite Empfangsschwelle (T_p1; T_2; T_p1, T_p2) einen Spannungswert hat, der kleiner als der Spannungswert der ersten Empfangsschwelle (T_U) oder größer als der größte Spannungswert ist, der sich im Normalbetrieb für einen dominanten Buszustand (U_D0) in der zweiten Kommunikationsphase (452) auf dem Bus (40) einstellt,
**dadurch gekennzeichnet, dass**
der Empfänger (122), in der zweiten Kommunikationsphase (452) zur Erzeugung des digitalen Signals (RxD) zusätzlich eine dritte Empfangsschwelle (T_p2) verwendet, die einen Spannungswert hat, der größer als der größte Spannungswert ist, der von einer Teilnehmerstation (10, 20, 30) des Bussystems (1) für einen Buszustand in der zweiten Kommunikationsphase (452) getrieben wird,
wobei für den Empfänger (122) mit der zweiten Empfangsschwelle (T_p1) ein anderer Sendekonflikt erkennbar ist als mit der dritten Empfangsschwelle (T_p2).

## Claims

1. Device (12; 16; 32) for a serial bus system (1), comprising
a receiver (122) for receiving a signal from a bus (40) of the bus system (1), in which, for a message (45) that is exchanged between subscriber stations (10, 20, 30) of the bus system (1), a recessive bus state (401, U_D1) is overwritable by a dominant bus state (402, U_D0) and the recessive bus state (401) is generated differently in a first communication phase (451; 453, 451) from the recessive bus state (U_D1) in a second communication phase (452), wherein the receiver (122) is configured to generate a digital signal (RXD; S1) on the basis of the signal received from the bus (40) and to output the signal (RXD; S1) to a communication control device (11) for evaluating the data contained in the digital signal (RXD; S1),
wherein the receiver (122) is additionally configured to use at least one first reception threshold (T_u) and a second reception threshold (T_p1; T_2; T_p1, T_p2) in the second communication phase (452) for generating the digital signal (RXD; S1), and
wherein the second reception threshold (T_p1; T_2; T_p1, T_p2) has a voltage value that is lower than the voltage value of the first reception threshold (T_U) or higher than the highest voltage value established on the bus (40) during normal operation for a dominant bus state (U_D0) in the second communication phase (452), **characterized in that**
the receiver (122) is configured to use in addition a third reception threshold (T_p2) in the second communication phase (452) for generating the digital signal (RxD), said third reception threshold having a voltage value that is higher than the highest voltage value that is driven by a subscriber station (10, 20, 30) of the bus system (1) for a bus state in the second communication phase (452),
wherein for the receiver (122), with the second reception threshold (T_p1), a transmission conflict that is recognizable is different from that recognizable with the third reception threshold (T_p2).

2. Device (12; 16; 32) according to Claim 1, wherein the receiver (122) is configured to check at least the second reception threshold (T_p1; T_p2; T_p1, T_p2) in a defined time window (t_P) in respect of whether the signal (VDIFF) received from the bus (40) no longer falls below or exceeds the second reception threshold (T_p1; T_p2; T_p1, T_p2).

3. Device (12; 16; 32) according to either of the preceding claims, wherein the bus states (401, 402) of the signal received from the bus (40) in the first communication phase (451; 453, 451) are generated with a physical layer different from the bus states (U_D0, U_D1) of the signal received in the second communication phase (452).

4. Device (12; 16; 32) according to any of the preceding claims, wherein the bus states (401, 402) of the signal received from the bus (40) in the first communication phase (451; 453, 451) have a longer bit time (t_b1) than the bus states (U_D0, U_D1) of the signal received in the second communication phase (452).

5. Device (12; 16; 32) according to any of the preceding claims, wherein the first communication phase (451; 453, 451) involves negotiation as to which of the subscriber stations (10, 20, 30) of the bus system (1) obtains an at least temporarily exclusive collision-free access to the bus (40) in the subsequent second communication phase (452).

6. Device (12; 16; 32) according to any of the preceding claims, additionally comprising a reception threshold adapting device (15) for evaluating the signal received from the bus (40) with respect to the currently present communication phase (451 to 453) and for switching the voltage value and the number of reception thresholds (T_p1; T_p2; T_p1, T_p2) used on the basis of the result of the evaluation.

7. Device (12; 16; 32) according to any of the preceding claims, wherein a reception threshold adapting device (15) supplementarily switches at least one second reception threshold (T_p1; Tp2; T_p1, T_p2) in addition to the first reception threshold (T_u) if, after the first communication phase (451; 453, 451), in which no exclusive collision-free access to the bus (40) of the bus system (1) by a subscriber station (10, 20, 30) is ensured, there is a switchover to the communication phase (452) having the exclusive collision-free access to the bus (40).

8. Device (12; 16; 32) according to any of the preceding claims,
additionally comprising a transmitter (121) for transmitting messages (45) onto a bus (40) of the bus system (1),
wherein the transmitter (121) is configured to switch between a first operating mode and a second operating mode when transmitting the different communication phases (451 to 453) of a message (45; 46) .

9. Device (12; 16; 32) according to Claim 8,
wherein the transmitter (121) in the first operating mode is configured to generate a first data state as a bus state (402) having different bus levels for two bus wires (41, 42) of the bus line (3) and to generate a second data state as a bus state (401) having the same bus level for the two bus wires (41, 42) of the bus line (3), and
wherein the transmitter (121) in the second operating mode is configured to generate a bus state (U_D0) for the first data state as in the first operating mode and to generate the bus state (U_D1) for the second data state (U_D1) differently from the bus state (401) for the second data state (U_D1) in the first operating mode.

10. Subscriber station (10; 30) for a serial bus system (1), comprising
a communication control device (11; 31) for controlling a communication of the subscriber station (10; 30) with at least one other subscriber station (10; 20; 30) of the bus system (1) and
a device (12; 16, 32) according to any of the preceding claims.

11. Subscriber station (10; 30) according to Claim 10,
wherein the device (12; 16; 32) is configured to signal to the communication control device (11; 31) using the reception signal (RXD) or using a signal (S1) via a separate line if an evaluation of the reception thresholds (T_u, T_p1; T_u, T_p2; T_u, T_p1, T_p2) and optionally of a temporal correlation between the transmission signal (TXD; TxD1) and the reception signal (RXD) reveals that a transmission conflict is present on the bus (40), and
wherein the communication control device (11; 31) is configured to generate or to terminate the transmission signal (TXD; TxD1) on the basis of the signal (RXD; S1) and/or to signal the transmission conflict to other subscriber stations (20; 30) of the bus system (1).

12. Bus system (1) comprising
a bus (40), and
at least two subscriber stations (10; 20; 30) which are connected to one another via the bus (40) in such a way that they can serially communicate with one another and of which at least one subscriber station (10; 30) is a subscriber station (10; 30) according to Claim 10 or 11.

13. Method for communication in a serial bus system (1),
wherein the method is performed by way of a receiver (122) for receiving a signal from a bus (40) of the bus system (1), and wherein the receiver (122) performs the steps of
receiving a signal from the bus (40) of the bus system (1), in which, for a message (45) that is exchanged between subscriber stations (10, 20, 30) of the bus system (1), a recessive bus state (401, U_D1) is overwritable by a dominant bus state (402, U_D0) and the recessive bus state (401) is generated differently in a first communication phase (451; 453, 451) from the recessive bus state (U_D1) in a second communication phase (452),
generating a digital signal (RXD; S1), on the basis of the signal received from the bus (40), and outputting the generated digital signal (RXD; S1) to a communication control device (11) for evaluating the data contained in the digital signal (RXD; S1),
wherein the receiver (122) uses at least one first reception threshold (T_u) and a second reception threshold (T_p1; T_2; T_p1, T_p2) in the second communication phase (452) for generating the digital signal (RXD; S1), and
wherein the second reception threshold (T_p1; T_2; T_p1, T_p2) has a voltage value that is lower than the voltage value of the first reception threshold (T_U) or higher than the highest voltage value established on the bus (40) during normal operation for a dominant bus state (U_D0) in the second communication phase (452),
**characterized in that**
the receiver (122) uses in addition a third reception threshold (T_p2) in the second communication phase (452) for generating the digital signal (RxD), said third reception threshold having a voltage value that is higher than the highest voltage value that is driven by a subscriber station (10, 20, 30) of the bus system (1) for a bus state in the second communication phase (452),
wherein for the receiver (122), with the second reception threshold (T_p1), a transmission conflict that is recognizable is different from that recognizable with the third reception threshold (T_p2).

## Revendications

1. Dispositif (12 ; 16 ; 32) pour un système de bus (1) série, comprenant
un récepteur (122) destiné à recevoir un signal d'un bus (40) du système de bus (1), avec lequel, pour un message (45) qui est échangé entre des stations d'abonné (10, 20, 30) du système de bus (1), un état de bus récessif (401, U_D1) peut être écrasé par un état de bus dominant (402, U_DO) et l'état de bus récessif (401) dans une première phase de communication (451 ; 453, 451) est généré différemment de l'état de bus récessif (U_D1) dans une deuxième phase de communication (452),
le récepteur (122) étant configuré pour, sur la base du signal reçu par le bus (40), générer un signal numérique (RXD ; S1) et délivrer le signal (RXD ; S1) à un dispositif de commande de communication (11) afin d'interpréter les données contenues dans le signal numérique (RXD ; S1),
le récepteur (122) étant en outre configuré pour, dans la deuxième phase de communication (452), en vue de générer le signal numérique (RXD ; S1), utiliser au moins un premier seuil de réception (T_u) et un deuxième seuil de réception (T_p1 ; T_2 ; T_p1, T_p2), et
le deuxième seuil de réception (T_p1; T_2 ; T_p1, T_p2) ayant une valeur de tension qui est inférieure à la valeur de tension du premier seuil de réception (T_u) ou supérieure à la plus grande valeur de tension qui s'établit sur le bus (40) en fonctionnement normal dans la deuxième phase de communication (452) pour un état de bus dominant (U_DO), **caractérisé en ce que** le récepteur (122) est configuré pour, dans la deuxième phase de communication (452), en vue de générer le signal numérique (RxD), utiliser en plus un troisième seuil de réception (T_p2), lequel a une valeur de tension qui est supérieure à la plus grande valeur de tension qui est utilisée par une station d'abonné (10, 20, 30) du système de bus (1) pour un état de bus dans la deuxième phase de communication (452),
un autre conflit d'émission pouvant être reconnu pour le récepteur (122) avec le deuxième seuil de réception (T_p1) qu'avec le troisième seuil de réception (T_p2).

2. Dispositif (12 ; 16 ; 32) selon la revendication 1, le récepteur (122) étant configuré pour contrôler au moins le deuxième seuil de réception (T_p1 ; T_p2 ; T_p1, T_p2) dans une fenêtre temporelle (t_P) définie afin de vérifier si le signal (VDIFF) reçu par le bus (40) n'est pas inférieur ou supérieur au deuxième seuil de réception (T_p1; T_p2 ; T_p1, T_p2).

3. Dispositif (12 ; 16 ; 32) selon l'une des revendications précédentes, les états de bus (401, 402) du signal reçu par le bus (40) dans la première phase de communication (451 ; 453, 451) étant générés avec une autre couche physique que les états de bus (U_D0, U_D1) du signal reçu dans la deuxième phase de communication (452).

4. Dispositif (12 ; 16 ; 32) selon l'une des revendications précédentes, les états de bus (401, 402) du signal reçu par le bus (40) dans la première phase de communication (451 ; 453, 451) ayant un temps de bit (t_b1) plus long que les états de bus (U_D0, U_D1) du signal reçu dans la deuxième phase de communication (452) .

5. Dispositif (12 ; 16 ; 32) selon l'une des revendications précédentes, une négociation étant effectuée dans la première phase de communication (451 ; 453, 451) afin de déterminer celle des stations d'abonné (10, 20, 30) du système de bus (1) qui obtient un accès exempt de collision, au moins temporairement exclusif, au bus (40) dans la deuxième phase de communication (452) qui suit.

6. Dispositif (12 ; 16 ; 32) selon l'une des revendications précédentes, comprenant en outre un dispositif d'adaptation (15) de seuil de réception destiné à interpréter le signal reçu par le bus (40) en référence à la phase de communication (451 à 453) actuellement présente et à commuter la valeur de tension et le nombre du/des seuil(s) de réception (T_p1; T_p2 ; T_p1, T_p2) utilisés sur la base du résultat de l'interprétation.

7. Dispositif (12 ; 16 ; 32) selon l'une des revendications précédentes, un dispositif d'adaptation (15) de seuil de réception rattachant au moins un deuxième seuil de réception (T_p1 ; Tp2 ; T_p1, T_p2) au premier seuil de réception (T_u) si, après la première phase de communication (451 ; 453, 451), dans laquelle aucun accès exclusif exempt de collision d'une station d'abonné (10, 20, 30) au bus (40) du système de bus (1) n'est garanti, une permutation est effectuée vers la phase de commutation (452) avec l'accès exclusif exempt de collision au bus (40).

8. Dispositif (12 ; 16 ; 32) selon l'une des revendications précédentes,
comprenant en outre un émetteur (121) destiné à émettre des messages (45) sur le bus (40) du système de bus (1),
l'émetteur (121) étant configuré pour, lors de l'émission des différentes phases de communication (451 à 453) d'un message (45 ; 46), commuter entre un premier mode de fonctionnement et un deuxième mode de fonctionnement.

9. Dispositif (12 ; 16 ; 32) selon la revendication 8,
l'émetteur (121) dans le premier mode de fonctionnement étant configuré pour générer un premier état de données en tant qu'état de bus (402) avec des niveaux de bus différents pour deux fils de bus (41, 42) de la ligne de bus (3) et pour générer un deuxième état de données en tant qu'état de bus (401) avec le même niveau de bus pour les deux fils de bus (41, 42) de la ligne de bus (3), et
l'émetteur (121) dans le deuxième mode de fonctionnement étant configuré pour générer un état de bus (U_D0) pour le premier état de données comme dans le premier mode de fonctionnement et générer l'état de bus (U_D1) pour le deuxième état de données (U_D1) différemment de l'état de bus (401) pour le deuxième état de données (U_D1) dans le premier mode de fonctionnement.

10. Station d'abonné (10 ; 30) pour un système de bus (1) série, comprenant
un dispositif de commande de communication (11 ; 31) destiné à commander une communication de la station d'abonné (10 ; 30) avec au moins une autre station d'abonné (10 ; 20 ; 30) du système de bus (1), et
un dispositif (12 ; 16 ; 32) selon l'une des revendications précédentes.

11. Station d'abonné (10 ; 30) selon la revendication 10,
le dispositif (12 ; 16 ; 32) étant configuré pour signaler au dispositif de commande de communication (11 ; 31) avec le signal de réception (RXD) ou avec un signal (S1) par le biais d'une ligne séparée lorsqu'il résulte d'une interprétation des seuils de réception (T_u, T_p1; T_u, T_p2 ; T_u, T_p1, T_p2) et, en option, d'une corrélation temporelle entre le signal d'émission (TXD ; TxD1) et le signal de réception (RXD), qu'il existe un conflit d'émission sur le bus (40), et
le dispositif de commande de communication (11 ; 31) étant configuré pour générer ou pour interrompre le signal d'émission (TXD ; TxD1) sur la base du signal de réception (RXD ; S1) et/ou signaler le conflit d'émission à d'autres stations d'abonné (20 ; 30) du système de bus (1).

12. Système de bus (1), comprenant
un bus (40) et
au moins deux stations d'abonné (10 ; 20 ; 30) qui sont reliées entre elles par le biais du bus (40) de telle sorte qu'elles peuvent communiquer entre elles en série et parmi lesquelles au moins une station d'abonné (10 ; 30) est une station d'abonné (10 ; 30) selon la revendication 10 ou 11.

13. Procédé de communication dans un système de bus (1) série,
le procédé étant mis en œuvre avec un récepteur (122) destiné à recevoir un signal d'un bus (40) du système de bus (1), et le récepteur (122) exécutant les étapes suivantes
réception d'un signal du bus (40) du système de bus (1), dans lequel, pour un message (45) qui est échangé entre des stations d'abonné (10, 20, 30) du système de bus (1), un état de bus récessif (401, U_D1) peut être écrasé par un état de bus dominant (402, U_DO) et l'état de bus récessif (401) dans une première phase de communication (451 ; 453, 451) est généré différemment de l'état de bus récessif (U_D1) dans une deuxième phase de communication (452),
génération d'un signal numérique (RXD ; S1) sur la base du signal reçu par le bus (40) et
délivrance en sortie du signal numérique (RXD ; S1) généré à un dispositif de commande de communication (11) afin d'interpréter les données contenues dans le signal numérique (RXD ; S1),
le récepteur (122), dans la deuxième phase de communication (452), en vue de générer le signal numérique (RXD ; S1), utilisant au moins un premier seuil de réception (T_u) et un deuxième seuil de réception (T_p1 ; T_2 ; T_p1, T_p2), et
le deuxième seuil de réception (T_p1; T_2 ; T_p1, T_p2) ayant une valeur de tension qui est inférieure à la valeur de tension du premier seuil de réception (T_u) ou supérieure à la plus grande valeur de tension qui s'établit sur le bus (40) en fonctionnement normal dans la deuxième phase de communication (452) pour un état de bus dominant (U_DO), **caractérisé en ce que**
le récepteur (122), dans la deuxième phase de communication (452), en vue de générer le signal numérique (RxD), utilise en plus un troisième seuil de réception (T_p2), lequel a une valeur de tension qui est supérieure à la plus grande valeur de tension qui est utilisée par une station d'abonné (10, 20, 30) du système de bus (1) pour un état de bus dans la deuxième phase de communication (452),
un autre conflit d'émission pouvant être reconnu pour le récepteur (122) avec le deuxième seuil de réception (T_p1) qu'avec le troisième seuil de réception (T_p2).
